# EUROPEAN PATENT SPECIFICATION

(11) **EP 2 509 133 B1**
(45) Date of publication and mention of the grant of the patent: **20.12.2017**
(21) Application number: 11185166.3
(22) Date of filing: 14.10.2011
(51) Int. Cl.: H01M 2/04, H01M 2/06, H01M 2/12

(54) **Rechargeable battery**
Wiederaufladbare Batterie
Batterie rechargeable

(30) Priority: 07.04.2011 KR 20110032188
(43) Date of publication of application: 10.10.2012
(73) Proprietor: Samsung SDI Co., Ltd., Gyeonggi-do (KR); Robert Bosch GmbH, 70442 Stuttgart (DE)
(72) Inventor: Kim, Duk-Jung, Yongin-si Gyeonggi-do (KR)
(74) Representative: Mounteney, Simon James

(56) References cited:
- EP-A1- 1 258 931
- WO-A1-2008/072841
- JP-A- 2003 068 268
- US-A1- 2004 191 610

## Description

### BACKGROUND

### 1. Field

The present invention relates to a rechargeable battery.

### 2. Description of the Related Art

Unlike a primary battery, a rechargeable battery can repeatedly perform charging and discharging. A small-capacity rechargeable battery may be used in a portable small-sized electronic device, such as a mobile phone, a notebook computer, and a camcorder, and a large-capacity rechargeable battery may be used as a power supply for driving a motor, such as one for a hybrid vehicle.

For example, a rechargeable battery includes an electrode assembly, a case for receiving the electrode assembly, a cap plate combined to an opening of the case, and an electrode terminal installed in the cap plate and connected to the electrode assembly. The cap plate includes a terminal hole for installing the electrode terminal, and a vent hole, and a vent plate which is thinner than the cap plate is welded in the vent hole. When internal pressure is increased by the gas produced inside the rechargeable battery due to charging and discharging of the electrode assembly, the vent plate is ruptured and the gas is discharged.

When an internal short circuit occurs at the rechargeable battery, that is, when a positive electrode of the electrode assembly and a negative electrode thereof are short circuited, a potential difference between the charged positive electrode and the negative electrode quickly is reduced, thereby generating heat and resulting in an electrolyte solution being decomposed. When the electrolyte solution is decomposed, a large amount of gas such as methane, hydrogen, or carbon dioxide is generated. The gas substantially increases the internal pressure of the rechargeable battery compared to that of the normal charging and discharging operation.

However, the cap plate is conventionally formed having a plane shape, so it cannot quickly transmit the gas that can instantly or quickly increase the internal pressure to the vent plate. Therefore, before the internal pressure is instantly or quickly increased to rupture the vent plate, the rechargeable battery may explode.

The above information disclosed in this Background section is only for enhancement of understanding of the background of the invention, and therefore it may contain information that does not form the prior art that is already known in this country to a person of ordinary skill in the art.

WO 2008072841 A1 discloses a cylindrical battery constructed in a structure in which a crimp region is formed at the upper end of the container.

US 20040191610 A1 discloses an end cap seal assembly for an electrochemical cell such as an alkaline cell, comprising a convoluted end cap which may also function as a cell terminal.

JP 2003068268 A discloses a closed type storage battery comprising a positive electrode cap having a positive terminal swelling toward the outside of the storage battery in the center of the electrode cap.

### SUMMARY

The present invention sets out to provide a rechargeable battery that has improved stability and is configured to quickly transmit generated gas to a vent plate when an internal short circuit occurs.

According to an embodiment of the present invention, a rechargeable battery includes the features of Claim 1. Optional features of the invention are set out in Claims 2 to 7.

According to an aspect of embodiments of the present invention, a round unit is formed in a cap plate such that when an internal short circuit is generated, generated gas is quickly transmitted to a vent plate through the round unit. The gas transmitted to the vent plate ruptures the vent plate and is discharged through a vent hole. Therefore, the rechargeable battery according to embodiments of the present invention is prevented or substantially prevented from exploding, and stability of the rechargeable battery in a short circuit is improved.

### BRIEF DESCRIPTION OF THE DRAWINGS

FIG. 1 is a perspective view of a rechargeable battery according to an embodiment of the present invention.
FIG. 2 is a cross-sectional view of the rechargeable battery of FIG. 1, taken at the line II-II.
FIG. 3 is a cross-sectional view of the rechargeable battery of FIG. 1, taken at the line III-III of FIG. 2.
FIG. 4 is a detail cross-sectional view of a round unit of FIG. 2, taken at the region IV.
FIG. 5 is a partial cross-sectional view of a rechargeable battery , not forming part of the invention.
FIG. 6 is a partial cross-sectional view of a rechargeable battery according to another embodiment of the present invention.

### DETAILED DESCRIPTION

The present invention will be described more fully hereinafter with reference to the accompanying drawings, in which some embodiments of the invention are shown. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

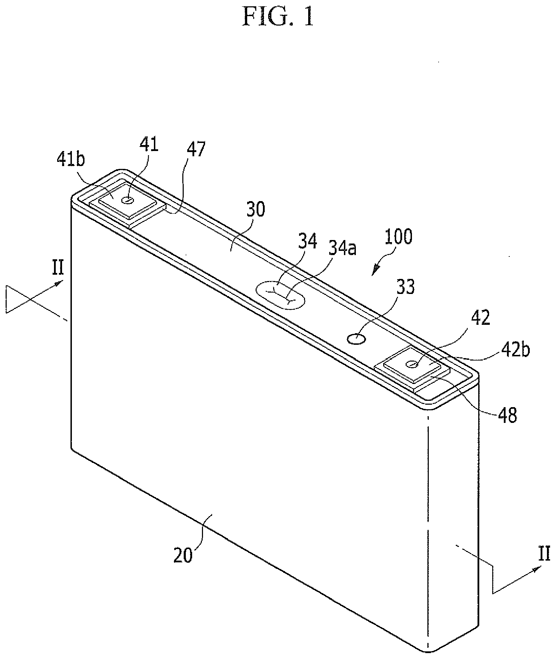

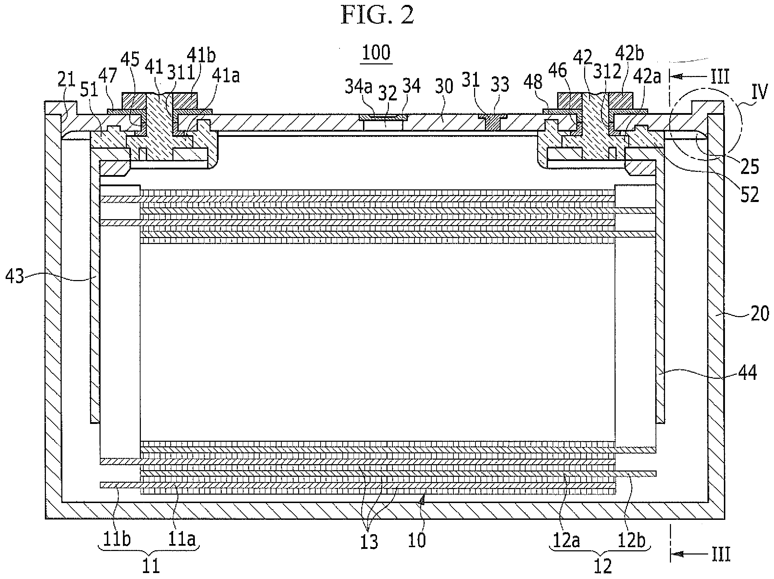

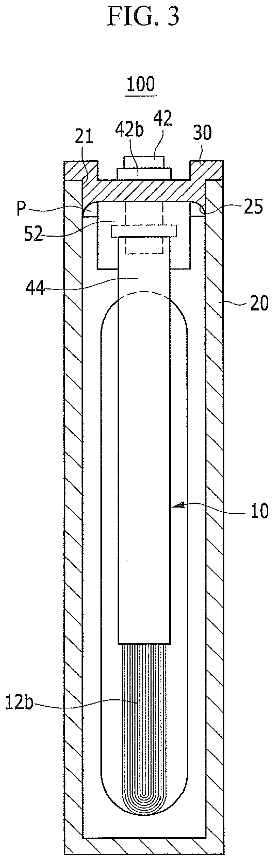

FIG. 1 is a perspective view of a rechargeable battery 100 according to an embodiment of the present invention; FIG. 2 is a cross-sectional view of the rechargeable battery 100, taken at the line II-II of FIG. 1; and FIG. 3 is a cross-sectional view of the rechargeable battery 100, taken at the line III-III of FIG. 2.

Referring to FIG. 1 through FIG. 3, the rechargeable battery 100 includes an electrode assembly 10 for performing a charge and discharge operation, a case 20 containing the electrode assembly 10 and an electrolyte solution, and a cap plate 30 combined with and sealing an opening of the case 20.

The electrode assembly 10 includes a negative electrode 11 and a positive electrode 12 on opposite surfaces of a separator 13 that is an insulator, and the electrode assembly 10, in this embodiment, is formed by winding the negative electrode 11, the separator 13, and the positive electrode 12 in a jelly roll shape.

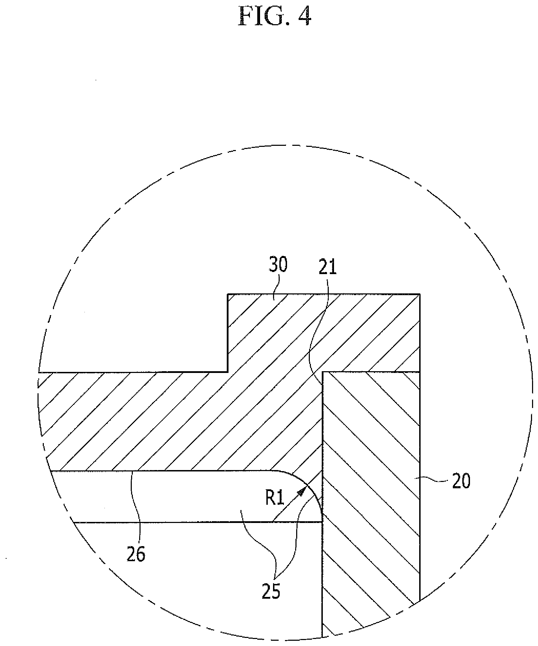

FIG. 4 is a detail cross-sectional view of a round unit of FIG. 2, taken at the region IV.

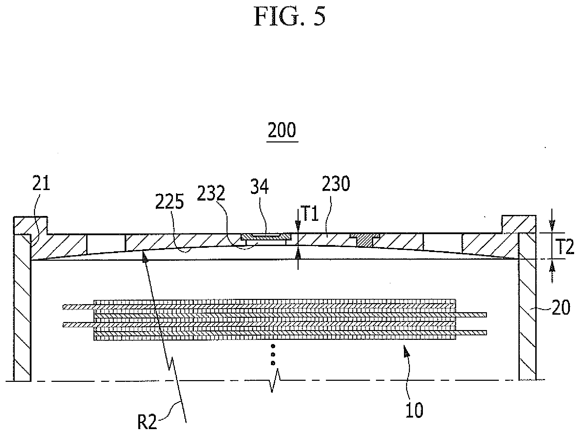

FIG. 5 is a partial cross-sectional view of a rechargeable battery according to another embodiment of the present invention.

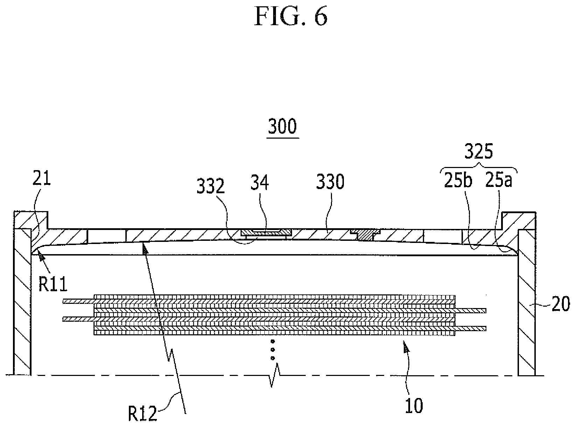

FIG. 6 is a partial cross-sectional view of a rechargeable battery according to another embodiment of the present invention.

### DETAILED DESCRIPTION

The present invention will be described more fully hereinafter with reference to the accompanying drawings, in which some embodiments of the invention are shown. As those skilled in the art would realize, the described embodiments may be modified in various different ways, all without departing from the scope of the present invention. Accordingly, the drawings and description are to be regarded as illustrative in nature and not restrictive. Like reference numerals designate like elements throughout the specification.

FIG. 1 is a perspective view of a rechargeable battery 100 according to an embodiment of the present invention; FIG. 2 is a cross-sectional view of the rechargeable battery 100, taken at the line II-II of FIG. 1; and FIG. 3 is a cross-sectional view of the rechargeable battery 100, taken at the line III-III of FIG. 2.

Referring to FIG. 1 through FIG. 3, the rechargeable battery 100 includes an electrode assembly 10 for performing a charge and discharge operation, a case 20 containing the electrode assembly 10 and an electrolyte solution, and a cap plate 30 combined with and sealing an opening of the case 20.

The electrode assembly 10 includes a negative electrode 11 and a positive electrode 12 on opposite surfaces of a separator 13 that is an insulator, and the electrode assembly 10, in this embodiment, is formed by winding the negative electrode 11, the separator 13, and the positive electrode 12 in a jelly roll shape.

TThe electrode assembly 10 can also be assembled by stacking the negative electrode 11 and the positive electrode 12 formed as single plates, respectively, with the separator 13 therebetween, or, in another embodiment, the electrode assembly 10 may be assembled by folding the negative electrode 11, the separator 13, and the positive electrode 12 in a zigzag manner (not shown).

The negative and positive electrodes 11 and 12 include coated regions 11a and 12a formed by coating an active material on a respective current collecting material, and uncoated regions 11b and 12b made up of exposed parts of the respective current collecting materials that are not coated with the active material and are located on opposite sides of the coated regions 11a and 12a. For example, in one embodiment, the current collecting material of the negative electrode 11 is formed of copper, and the current collecting material of the positive electrode 12 is formed of aluminium.

The uncoated region 11b of the negative electrode 11 is formed at an end of the negative electrode 11 along the wound negative electrode 11. The uncoated region 12b of the positive electrode 12 is formed at an end of the positive electrode 12 along the positive electrode 12. That is, the uncoated regions 11b and 12b are disposed at either end of the electrode assembly 10 to enable electrical connection.

The case 20 has an opening 21 on one side, which allows insertion of the electrode assembly 10 through the opening 21, and, in this embodiment, it has a generally rectangular shape forming a space therein for receiving the electrode assembly 10 and the electrolyte solution.

The cap plate 30 is combined, or coupled, to the opening 21 of the case 20 to form a closed and sealed receiving space together with the case 20. For example, in one embodiment, the case 20 and the cap plate 30 are made of aluminum so they have an excellent welding property when combined and welded. However, embodiments of the present invention are not limited thereto.

The cap plate 30, includes an electrolyte solution inlet 31 and a vent hole 32. The electrolyte solution inlet 31 allows injection of electrolyte solution into the case 20 when the cap plate 30 is combined with the case 20. After the electrolyte solution is injected, the electrolyte solution inlet 31 is sealed with a sealing cap 33.

The vent hole 32 discharges the gas produced by charging and discharging to the outside of the rechargeable battery 100 and is then closed by a vent plate 34 that may be welded to the cap plate 30 and configured to prevent or substantially prevent explosion of the rechargeable battery 100. That is, when the internal pressure of the rechargeable battery 100 reaches a certain value (e.g., a predetermined value), the vent plate 34 is ruptured. In this embodiment, a notch 34a is formed in the vent plate 34 and enables the vent plate 34 to be ruptured. When the vent plate 34 is ruptured, the vent hole 32 is opened and the gas in the rechargeable battery 100 is discharged.

The cap plate 30 includes terminal holes 311 and 312 penetrated therethrough for connecting between the inside and the outside of the case 20. Negative and positive electrode terminals 41 and 42 are installed in the terminal holes 311 and 312 of the cap plate 30 and are electrically connected to the electrode assembly 10. That is, the negative electrode terminal 41 is electrically connected to the negative electrode 11 of the electrode assembly 10, and the positive electrode terminal 42 is electrically connected to the positive electrode 12 of the electrode assembly 10.

While installed in the terminal holes 311 and 312 of the cap plate 30, the negative and positive electrode terminals 41 and 42 are connected to negative and positive electrode lead tabs 43 and 44, respectively, using flanges 41a and 42a inside the case 20, and are connected to respective terminal plates 41b and 42b outside the case 20. The terminal plates 41b and 42b may be connected to a bus bar (not shown) to connect a plurality of rechargeable batteries 100 in series or in parallel.

Further, in this embodiment, the rechargeable battery 100 includes gaskets 45 and 46 and insulators 47 and 48 so as to form an electrical insulation structure and an electrolyte sealing structure between the negative and positive electrode terminals 41 and 42 and the terminal holes 311 and 312 of the cap plate 30.

The gaskets 45 and 46 are provided between the negative and positive electrode terminals 41 and 42 and the terminal holes 311 and 312, and are extended between the flanges 41a and 42a and an inner surface of the cap plate 30 to electrically insulate the negative and positive electrode terminals 41 and 42 and the cap plate 30 and seal the terminal holes 311 and 312.

The insulators 47 and 48 are provided between the negative and positive electrode terminals 41 and 42 and the terminal holes 311 and 312, and are extended between the terminal plates 41b and 42b and an outer surface of the cap plate 30 to electrically insulate the negative and positive electrode terminals 41 and 42 and the cap plate 30 and seal the terminal holes 311 and 312.

The negative and positive electrode lead tabs 43 and 44 are made of conductive members and electrically connect the negative and positive electrode terminals 41 and 42 to the uncoated regions 11b and 12b of the negative and positive electrodes 11 and 12, respectively, of the electrode assembly 10. That is, in one embodiment, the negative and positive electrode lead tabs 43 and 44 are combined, or coupled, to bottom ends of the negative and positive electrode terminals 41 and 42 to caulk the negative and positive electrode lead tabs 43 and 44 so the negative and positive electrode lead tabs 43 and 44 are supported by the flanges 41a and 42a and are coupled to the bottom ends of the negative and positive electrode terminals 41 and 42.

The rechargeable battery 100 further includes insulating members 51 and 52 for electrically insulating the negative and positive electrode lead tabs 43 and 44 and the cap plate 30. That is, the insulating members 51 and 52 are installed between the negative and positive electrode lead tabs 43 and 44 and the cap plate 30.

For example, in this embodiment, the insulating members 51 and 52 receive the flanges 41a and 42a of the electrode terminals 41 and 42 and are combined, or coupled, to the cap plate 30 to electrically insulate the flanges 41a and 42a and the cap plate 30. The insulating members 51 and 52 may further receive the negative and positive electrode lead tabs 43 and 44 connected to the flanges 41a and 42a to electrically insulate the negative and positive electrode lead tabs 43 and 44 and the cap plate 30.

The rechargeable battery 100 is configured to prevent or substantially prevent explosion caused by an internal short circuit. In this regard, the cap plate 30 forms a round unit 25 to a connecting side of the case 20. The round unit defines a curved surface. Although the curved surface is provided in the round unit of the cap plate in this embodiment, in alternative embodiments, the curved surface could be provided on an appropriately configured part of the case wall, for example.

The cap plate 30 is connected to the opening 21 of the case 20 such that the round unit 25 is formed near the opening 21 to quickly transmit generated gas to the vent hole 32 and the vent plate 34, thereby preventing or substantially preventing the gas from collecting at a specific part of the case 20 or the cap plate 30.

In a conventional structure, gas may be substantially concentrated at the opening 21 in which the cap plate 30 is combined with the case 20. Therefore, in this embodiment, the round unit 25 is formed at both ends of the cap plate 30 in a lengthwise direction (see FIG. 2) and both ends of the cap plate 30 in a widthwise direction (see FIG. 3), and is connected or continuous along a circumference of the cap plate 30.

Referring to FIG. 4, the round unit 25 is formed to be concave toward the case 20. When the gas existing in the case 20 moves along an inner wall of the case 20 toward the cap plate 30, the round unit 25 can direct the gas to flow toward the vent hole 32 and the vent plate 34. In this embodiment, the round unit 25 having a first curvature radius R1 is connected to an inner surface inside the case 20 on a tangent line. Therefore, the gas in the case 20 is naturally transmitted to the vent plate 34 from the inside of the case 20.

The round unit 25 is formed on an inner side of the cap plate 30 along the circumference to correspond to the circumference of the opening 21 such that the cap plate 30 has the round unit 25 and a planar unit 26 surrounded by the round unit 25. That is, the inner side of the cap plate 30 includes the planar unit 26 and the round unit 25 that surrounds the outside of the planar unit 26 and protrudes from the planar unit 26. The round unit 25 is connected to the planar unit 26 on the tangent line of the first curvature radius R1, and the vent hole 32 is formed in the planar unit 26.

In this embodiment, the configuration of the insulating members 51 and 52 provided on the planar unit 26 is such as to define a gas passage P (see FIG. 3) for controlling gas flow between the round unit 25 formed outside the planar unit 26 and the insulating members 51 and 52 facing the round unit 25. The gas passage P is connected to the vent hole 32 and the vent plate 34 through the planar unit 26 (refer to FIG. 2). Therefore, the gas generated inside the case 20 is transmitted to the vent hole 32 through the gas passage P by the round unit 25.

When an internal short circuit occurs in the rechargeable battery 100, a potential difference between the negative electrode 11 and the positive electrode 12 is quickly reduced, thereby generating heat and decomposing the electrolyte solution. A large volume of gas that is instantly or quickly generated by decomposing the electrolyte solution is transmitted by the round unit 25 to the vent hole 32 from the opening 21 of the case 20. The gas is instantly or quickly concentrated on the vent plate 34 to rupture the vent plate 34 so that explosion of the rechargeable battery 100 at the opening 21 in which the cap plate 30 is combined with the case 20 can be prevented or substantially prevented.

FIG. 5 is a partial cross-sectional view of a rechargeable battery 200 not forming part of the present invention. Referring to FIG. 5, in the rechargeable battery 200, a round unit 225 is formed to be concave toward the inner space of the case 20 with a second curvature radius R2 between both ends in a lengthwise direction (i.e. right and left directions in FIG. 5) connected to the case 20 having the electrode assembly 10. A cap plate 230 of the secondary battery 200 has a minimum thickness T1 at a vent hole 232 in the center and the vent plate 34, and a maximum thickness T2 at an outermost part of the round unit 225.

That is, in the rechargeable battery 100 described above, the round unit 25 is arranged at the outer part of the inner side of the cap plate 30 to correspond to the opening 21 of the case 20. In contrast, in the rechargeable battery 200, the round unit 225 is formed to have an arch structure over the entire inner side of the cap plate 230. Therefore, in the secondary battery 200, throughout the whole region of the cap plate 230, a gas can be transmitted to the vent hole 232 and the vent plate 34. Further, the arch structure increases mechanical rigidity of the cap plate 230.

Further embodiments of the present invention will now be described, wherein further description of components and features having a same configuration as in the embodiment described above will be omitted, and only those components and features having a different configuration will be described.

FIG. 6 is a cross-sectional view of a rechargeable battery 300 according to another embodiment of the present invention. Referring to FIG. 6, in the rechargeable battery 300, a round unit 325 includes a first round unit 25a formed at both ends of the cap plate 30 in a lengthwise direction(see FIG. 6) and both ends of the cap plate 30 in a witdthwise direction(not shown), connected to an inner surface of the case 20 containing the electrode assembly 10 through a tangent line and having a first curvature radius R11 between both ends in a lengthwise direction (i.e. right and left directions in FIG. 6) and both ends in a widthwise direction(not shown), and a second round unit 25b connected to the first round unit 25a and having a second curvature radius R12 between both ends in a lengthwise direction (i.e. right and left directions in FIG. 6) that is greater than the first curvature radius R11.

That is, the first round unit 25a is arranged at sides of an inner surface of a cap plate 330 corresponding to sides of the opening 21 of the case 20, and the second round unit 25b is formed between opposite sides of the first round unit 25a. That is, the cap plate 330 quickly becomes thin on the first round unit 25a, and gently becomes thin on the second round unit 25b as compared to the first round unit 25a.

The first round unit 25a quickly transmits a gas to a vent hole 332 of the cap plate 330 and the vent plate 34 from the opening 21 in a manner similar to that of the rechargeable battery 100, and the second round unit 25b then quickly transmits the gas to the vent hole 332 and the vent plate 34 from the entire region of the cap plate 330 in a manner similar to that of the rechargeable battery 200.

While the present invention has been described in connection with certain embodiments, it is to be understood that the invention is not limited to the disclosed embodiments, but, on the contrary, is intended to cover various modifications and equivalent arrangements included within the scope of the appended claims.

## Claims

1. A rechargeable battery (100, 300) comprising:
an electrode assembly (10) comprising a first electrode (11), a second electrode (12), and a separator (13) between the first and second electrodes (10, 11);
a case (20) containing the electrode assembly (10); and
a cap plate (30, 330) sealing an opening (21) of the case (20) and comprising an electrode terminal (41, 42) connected to the electrode assembly (10),
wherein at least one of the cap plate (30, 330), the case (20) or another component of the battery is provided with a curved surface (25, 325) comprising a first concave surface (25, 25a) having a first curvature radius facing an inner space of the case (20) receiving the electrode assembly (10),
**characterised in that** the curved surface (25, 325) is connected to an inner side of the case (20) on a tangent line of the first concave surface (25, 25a), and formed at a circumference of the opening (21),
wherein the cap plate (30, 330) comprises a planar surface (26) or a second concave surface (25b), which faces the inner space of the case (20) and has a second curvature radius greater than the first curvature radius, surrounded by the curved surface (25, 325) and connected to the curved surface (25, 325) on another tangent line of the first concave surface (25, 25a),
wherein the cap plate (30, 330) includes a vent opening (32, 332) for discharging gas from inside the case (20), and
wherein the vent opening (32, 332) is formed in the planar surface (26) or second concave surface (25b), such that the curved surface (25 325) is adapted to direct gas towards the vent opening (32, 332).

2. A rechargeable battery (100, 300) according to claim 1,
wherein the electrode terminal (41, 42) is connected to the electrode assembly (10) through a lead tab (43, 44),
wherein an insulator (45, 46) is arranged in a terminal opening of the cap plate (30, 330),
wherein an insulating member (51, 52) is arranged between the lead tab (43, 44) and the cap plate (30, 330),
wherein the insulating member (51, 52) is adjacent the planar surface (26) or the second concave surface (25b), and
wherein a side of the insulating member (51, 52) and the curved surface (25, 325) define a gas passage therebetween.

3. A rechargeable battery (100, 330) according to any preceding claim,
wherein the cap plate (30, 330) has a minimum thickness at a first region corresponding to the vent opening (32, 332), and
wherein the cap plate (30, 330) has a maximum thickness at a second region corresponding to an outermost part of the curved surface (25, 325).

4. A rechargeable battery (100, 330) according to any preceding claim, and comprising a first portion comprising the first concave surface (25, 25a) and a second portion comprising the second concave surface (25b);
wherein the cap plate (30, 330) substantially becomes thinner from the inner side of the case (20) along an inward direction in the first portion (25), and
wherein the cap plate (30, 330) gradually becomes thinner along the inward direction in the second portion relative to the first portion.

5. A rechargeable battery (100, 330) according to any preceding claim,
wherein the curved surface (25, 325) is provided at least partly on the cap plate (30, 330).

6. A rechargeable battery (100, 330) according to any preceding claim,
wherein the curved surface (25, 325) is provided at least partly on the case (20).

## Patentansprüche

1. Wiederaufladbare Batterie (100, 300), umfassend:
eine Elektrodenanordnung (10), die eine erste Elektrode (11), eine zweite Elektrode (12) und einen Separator (13) zwischen der ersten und der zweiten Elektrode (10, 11) umfasst;
ein Gehäuse (20), das die Elektrodenanordnung (10) beinhaltet; und
eine Deckplatte (30, 330), die eine Öffnung (21) des Gehäuses (20) abdichtet und einen mit der Elektrodenanordnung (10) verbundenen Elektrodenanschluss (41, 42) einschließt,
wobei zumindest die Deckplatte (30, 330), das Gehäuse (20) oder ein weiteres Bauteil der Batterie mit einer gekrümmten Fläche (25, 325) bereitgestellt ist, die eine erste konkave Fläche (25, 25a) mit einem ersten Krümmungsradius umfasst, die einem Innenraum des die Elektrodenanordnung (10) aufnehmenden Gehäuses (20) zugewandt ist,
**dadurch gekennzeichnet, dass** die gekrümmte Fläche (25, 325) an einer Tangente der ersten konkaven Fläche (25, 25a) mit einer Innenseite des Gehäuses (20) verbunden und an einem Umfang der Öffnung (21) ausgebildet ist,
wobei die Deckplatte (30, 330) eine ebene Fläche (26) oder eine zweite konkave Fläche (25b), die dem Innenraum des Gehäuses (20) zugewandt ist und einen zweiten Krümmungsradius aufweist, der größer als der erste Krümmungsradius ist, umfasst, von der gekrümmten Fläche (25, 325) umgeben und an einer weiteren Tangente der ersten konkaven Fläche (25, 25a) mit der gekrümmten Fläche (25, 325) verbunden ist,
wobei die Deckplatte (30, 330) eine Lüftungsöffnung (32, 332) zum Abführen von Gas aus dem Inneren des Gehäuses (20) einschließt und
wobei die Lüftungsöffnung (32, 332) in der ebenen Fläche (26) bzw. der zweiten konkaven Fläche (25b) ausgebildet ist, sodass die gekrümmte Fläche (25, 325) dazu angepasst ist, Gas auf die Lüftungsöffnung (32, 332) zu richten.

2. Wiederaufladbare Batterie (100, 300) nach Anspruch 1,
wobei der Elektrodenanschluss (41, 42) durch eine Anschlussfahne (43, 44) mit der Elektrodenanordnung (10) verbunden ist,
wobei in einer Anschlussöffnung der Deckplatte (30, 330) ein Isolator (45, 46) angeordnet ist,
wobei zwischen der Anschlussfahne (43, 44) und der Deckplatte (30, 330) ein Isolierglied (51, 52) angeordnet ist, wobei das Isolierglied (51, 52) an die ebene Fläche (26) oder die zweite konkave Fläche (25b) angrenzt, und
wobei eine Seite des Isolierglieds (51, 52) und die gekrümmte Fläche (25, 325) dazwischen einen Gasweg definieren.

3. Wiederaufladbare Batterie (100, 330) nach einem der vorangehenden Ansprüche,
wobei die Deckplatte (30, 330) in einem ersten Bereich, welcher der Lüftungsöffnung (32, 332) entspricht, eine minimale Dicke aufweist, und
wobei die Deckplatte (30, 330) in einem zweiten Bereich, der einem äußersten Teil der gekrümmten Fläche (25, 325) entspricht, eine maximale Dicke aufweist.

4. Wiederaufladbare Batterie (100, 330) nach einem der vorangehenden Ansprüche, umfassend einen ersten Abschnitt, der die erste konkave Fläche (25, 25a) umfasst, und einen zweiten Abschnitt, der die zweite konkave Fläche (25b) umfasst;
wobei die Deckplatte (30, 330) von der Innenseite des Gehäuses (20) im ersten Abschnitt (25) nach innen im Wesentlichen dünner wird und
wobei die Deckplatte (30, 330) im zweiten Abschnitt relativ zum ersten Abschnitt nach innen graduell dünner wird.

5. Wiederaufladbare Batterie (100, 330) nach einem der vorangehenden Ansprüche, wobei die gekrümmte Fläche (25, 325) zumindest teilweise an der Deckplatte (30, 330) bereitgestellt ist.

6. Wiederaufladbare Batterie (100, 330) nach einem der vorangehenden Ansprüche, wobei die gekrümmte Fläche (25, 325) zumindest teilweise am Gehäuse (20) bereitgestellt ist.

## Revendications

1. Batterie rechargeable (100, 300) comprenant :
un ensemble d'électrodes (10) comprenant une première électrode (11), une seconde électrode (12) et un séparateur (13) entre les première et seconde électrodes (10, 11) ;
un boîtier (20) contenant l'ensemble d'électrodes (10) ; et
une plaque de capuchon (30, 330) scellant une ouverture (21) du boîtier (20) et comprenant une borne d'électrode (41, 42) raccordée à l'ensemble d'électrodes (10),
dans laquelle au moins l'un parmi la plaque de capuchon (30, 330), le boîtier (20) ou un autre composant de la batterie est prévu avec une surface incurvée (25, 325) comprenant une première surface concave (25, 25a) ayant un premier rayon de courbure faisant face à un espace interne du boîtier (20) recevant l'ensemble d'électrodes (10),
**caractérisée en ce que** la surface incurvée (25, 325) est raccordée à un côté interne du boîtier (20) sur une ligne tangente de la première surface concave (25, 25a), et formée au niveau d'une circonférence de l'ouverture (21),
dans laquelle la plaque de capuchon (30, 330) comprend une surface planaire (26) ou une seconde surface concave (25b), qui fait face à l'espace interne du boîtier (20) et a un second rayon de courbure supérieur au premier rayon de courbure, entourée par la surface incurvée (25, 325) et raccordée à la surface incurvée (25, 325) sur une autre ligne tangente de la première surface concave (25, 25a),
dans laquelle la plaque de capuchon (30, 330) comprend une ouverture d'évent (32, 332) pour décharger le gaz de l'intérieur du boîtier (20), et
dans laquelle l'ouverture d'évent (32, 332) est formée dans la surface planaire (26) ou la seconde surface concave (25b), de sorte que la surface incurvée (25, 325) est adaptée pour diriger le gaz vers l'ouverture d'évent (32, 332).

2. Batterie rechargeable (100, 300) selon la revendication 1,
dans laquelle la borne d'électrode (41, 42) est raccordée à l'ensemble d'électrode (10) par le biais d'une languette conductrice (43, 44),
dans laquelle un isolant (45, 46) est agencé dans une ouverture de borne de la plaque de capuchon (30, 330),
dans laquelle un élément isolant (51, 52) est agencé entre la languette conductrice (43, 44) et la plaque de capuchon (30, 330),
dans laquelle l'élément isolant (51, 52) est adjacent à la surface planaire (26) ou la seconde surface concave (25b), et
dans laquelle un côté de l'élément isolant (51, 52) et la surface incurvée (25, 325) définissent un passage de gaz entre eux.

3. Batterie rechargeable (100, 330) selon l'une quelconque des revendications précédentes,
dans laquelle la plaque de capuchon (30, 330) a une épaisseur minimum au niveau d'une première région correspondant à l'ouverture d'évent (32, 332), et
dans laquelle la plaque de capuchon (30, 330) a une épaisseur maximum au niveau d'une seconde région correspondant à la partie située le plus à l'extérieur de la surface incurvée (25, 325).

4. Batterie rechargeable (100, 330) selon l'une quelconque des revendications précédentes, et comprenant une première partie comprenant la première surface concave (25, 25a) et une seconde partie comprenant la seconde surface concave (25b) ;
dans laquelle la plaque de capuchon (30, 330) devient sensiblement plus fine à partir du côté interne du boîtier (20) le long d'une direction vers l'intérieur dans la première partie (25), et
dans laquelle la plaque de capuchon (30, 330) devient progressivement plus fine le long de la direction vers l'intérieur dans la seconde partie par rapport à la première partie.

5. Batterie rechargeable (100, 330) selon l'une quelconque des revendications précédentes, dans laquelle la surface incurvée (25, 325) est prévue au moins partiellement sur la plaque de capuchon (30, 330).

6. Batterie rechargeable (100, 330) selon l'une quelconque des revendications précédentes, dans laquelle la surface incurvée (25, 325) est prévue au moins partiellement sur le boîtier (20).
